# EUROPEAN PATENT APPLICATION

(11) **EP 3 932 203 A2**
(43) Date of publication of application: **05.01.2022**
(21) Application number: 21182537.7
(22) Date of filing: 29.06.2021
(51) Int. Cl.: A01N 33/12, A01N 59/16, A01N 59/20, D06M 11/42, D06M 11/83, D06M 13/332, D06M 13/46, A01P 1/00

(54) **BIOCIDAL INFUSED COMPOSITE FABRIC FOR CABIN INTERIORS**

(30) Priority: 30.06.2020 IN 202041027803; 18.06.2021 US 202117351816
(71) Applicant: B/E Aerospace, Inc., Winston-Salem, NC 27105 (US)
(72) Inventor: GOVINDARAJU, Parthasarathy, Bengaluru, KA 560048 (IN)
(74) Representative: Dehns

(57) **Abstract**

A biocidal composite wall or surface fabric (200, 400) installable within an aircraft cabin or other vehicle interior space includes a flexible woven layer. The woven layer is treated on its outer surface with a biocidal polymer coating. For example, the polymer coating (204) may incorporate biocidal microcapsules or nanocapsules configured for controlled release of biocidal compounds (212) in response to physical contact or other stimuli. The released biocidal compounds compromise or kill microbial compounds deposited on the outer surface, e.g., via physical contact by passengers or crewmembers. The woven layer includes additional biocidal molecules incorporated into its fibers and strands, the biocidal molecules capable of biocidal action in response to contact with the fabric.

## Description

### CROSS-REFERENCE TO RELATED APPLICATIONS

This application claims priority under 35 USC § 365 to prior filed Indian provisional patent application 202041027803 filed June 30, 2020. Said application 202041027803 is hereby incorporated by reference in its entirety.

### BACKGROUND

The ongoing global COVID-19 pandemic, and the possibility of future pandemics of similar nature and scale, has discouraged air passengers' willingness to travel without assured hygiene protection within aircraft interior cabins, primarily due to the potential for infection via the spread of viruses, bacteria, and other microbes or pathogens from infected persons through different suspected modes such as internal air circulation, interior wall surfaces, upholstery, etc. All these modes are potential vectors for the transmission of pathogens to previously uninfected passengers. It follows that for passengers to fly comfortably, they must fly safely, and feel safe while doing so. Currently most aircraft interior surfaces, as per Technical Standard Orders (TSO), are fashioned of microbial-inert (biostatic) materials, e.g., materials modified only to stop microbial growth, but not necessarily to attack any microbes or pathogens deposited on the surface.

### SUMMARY

A biocidal infused fabric installable on an interior cabin surface of an aircraft or other mobile platform is disclosed. In embodiments, the biocidal infused fabric includes a flexible fabric layer wherein component fibers are woven into strands of yarn, the fabric layer woven from the resulting yarn. The fabric is treated (e.g., on an external surface exposed to bacteria, viruses, pathogens, and other microbes) with a polymer coating. Within the polymer coating are dispersed biocidal agents configured for biocidal action against the pathogens or microbes in response to contact with the fabric (e.g., or other external stimuli).

In some embodiments, the biocidal compounds include microcapsules comprise a shell enclosing one or more biocidal compounds and configured for controlled release thereof in response to contact with the fabric by the pathogens or microbes. In some embodiments, additional biocidal molecules are incorporated into the fibers or strands of the underlying fabric layer and configured to react to contact with the fabric.

In some embodiments, the fabric layer is woven from yarn wherein the individual fibers are electrospun from liquid polymers or polymer solutions incorporating the biocidal molecules.

In some embodiments, the liquid polymer or polymer solution is treated with flame-resistant compounds.

In some embodiments, the biocidal molecules are grafted to the individual strands of the yarn.

In some embodiments, the polymer coating incorporates polymer chain molecules to which the biocidal molecules are crosslinked.

In some embodiments, the polymer coating incorporates flame-resistant compounds.

In some embodiments, the biocidal microcapsules and biocidal molecules include metal salts, metal oxides, polycationics, and/or quaternary ammonium (e.g., "quat") compounds.

In some embodiments, the biocidal microcapsules include microcapsules having a size not less than 1 micron and not more than 100 microns and/or nanocapsules having a size not more than 500 nm.

A biocidal infused composite fabric installable on an interior surface of an aircraft cabin is also disclosed. In embodiments, the fabric includes an underlying flexible layer woven from yarn comprising individual fibers and strands and treated (e.g., on an external surface exposed to contact from pathogens and/or microbes) with a positively charged conjugated polymer coating capable of inducing conductive stress within the cells of negatively charged pathogenic or microbial compounds in contact with the external surface.

In some embodiments, the underlying yarn includes additional biocidal molecules incorporated into its fibers and strands, capable of biocidal action in response to contact by pathogens or microbes.

In some embodiments, the individual fibers of the underlying yarn are electrospun from liquid polymers or polymer solutions incorporating the biocidal molecules.

In some embodiments, the liquid polymers or polymer solutions incorporate flame-resistant compounds.

In some embodiments, the biocidal molecules are grafted to strands or fibers of the underlying yarn.

In some embodiments, the biocidal microcapsules or molecules incorporate metal salts, metal oxides, polycationics, and/or quaternary ammonium ("quat") compounds.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a block diagram illustrating a passenger cabin incorporating biocidal infused surface fabric according to example embodiments of this disclosure;
FIG. 2A is a diagrammatic cross section illustrating a biocidal infused surface fabric according to example embodiments of this disclosure;
FIG. 2B is a diagrammatic cross section illustrating a biocidal infused surface fabric incorporating molecular crosslinking of biocidal compounds according to example embodiments of this disclosure;
FIG. 3 is an illustration of biocidal treatments for the biocidal infused surface fabric of FIGS. 2A or 2B; and
FIG. 4 is a diagrammatic cross section illustrating a biocidal conductive surface fabric according to example embodiments of this disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Broadly speaking, embodiments of the inventive concepts disclosed herein are directed to surface fabrics for the aircraft or other mobile platforms and interior spaces (e.g., installable as wall or ceiling fabric or as a cover for armrests, headrests, passenger seats) incorporating a biocidal coating configured to attack any microbes deposited on the surface of the fabric. By compromising any deposited microbes, the biocidal coating can prevent the surface fabric from serving as a transmission vector to subsequent uninfected persons making contact with the aircraft surface.

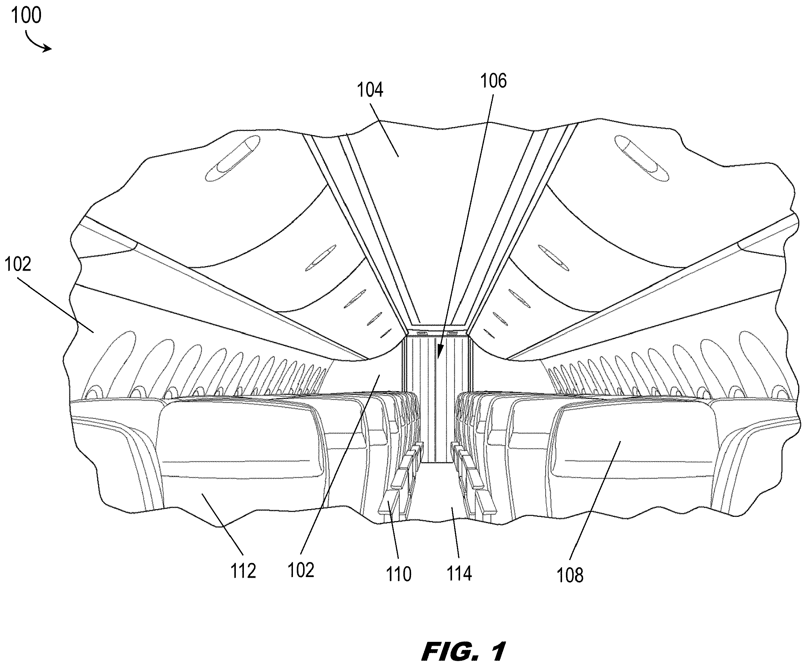

Referring to FIG. 1, an aircraft passenger cabin 100 is shown. However, the inventive concepts disclosed herein may be implemented in other interior spaces or mobile platforms, e.g., ground-based or water-based vehicles.

In embodiments, the passenger cabin 100 may include various interior surfaces or components fully or partially coverable with fabric for decorative or acoustic purposes. For example, wall surfaces 102, overhead surfaces 104, cabin dividers 106, headrests 108, armrests 110, passenger seats 112, or carpets 114 may incorporate some sort of fabric surface. Any or all of these surfaces may be subject to physical contact from multiple passengers or cabin crew during the course of a commercial flight; similarly, any or all of these surfaces may encounter the exhalations of passengers or crew. Whether by physical contact or by contact with such exhalations, any or all of these surfaces may serve as a transmission vector for viruses, bacteria, or other microbes carried by one passenger or crewmember and potentially transferrable to another.

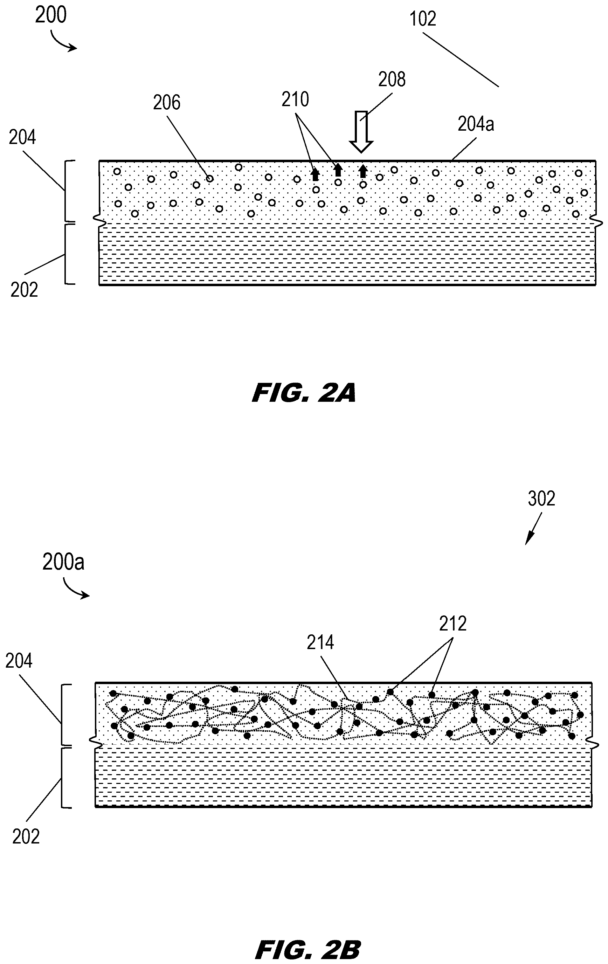

Referring to FIG. 2A, a biocidal infused composite fabric 200 is shown. The biocidal infused composite fabric 200 may include a fabric layer 202 and a polymer coating 204 infused with biocidal microcapsules 206.

In embodiments, the fabric layer 202 may be a flexible substrate woven from one or more yarns. For example, the yarn/s may incorporate organic or synthetic fibers, or combinations thereof.

In embodiments, the polymer coating 204 may be a resinous polymer compound to which the biocidal microcapsules 206 have been applied. For example, the polymer coating 204 may include, but is not limited to, one or more of a polyolefin, a polyurethane, a polyvinyl, a polycarbonate, and/or any other appropriate type of polymerized plastic compound. The polymer coating 204 may be applied to the fabric layer 202 via knife-over-roll coating, padding, dip coating, or any other appropriate method of application.

In embodiments, the biocidal microcapsules 206 may be dispersed throughout the polymer coating 204 prior to application of the polymer coating to the fabric layer 202. In some embodiments, the polymer coating 204 may be applied to the fabric layer 202 and the biocidal microcapsules 206 subsequently dispersed or impregnated throughout the polymer coating 204.

In embodiments, the biocidal microcapsules 206 may incorporate one or more biocidal agents or compounds in solid and/or liquid form. For example, the biocidal microcapsules may incorporate metal salts, metal oxides, quaternary ammonium ("quat") compounds or salts, other polycationic compounds, and/or other like biocidal agents capable of killing or compromising viruses, bacteria, or other microbial compounds in contact with the polymer coating 204, e.g., via interaction with the cellular membranes and/or damage (e.g., permeability loss, leakage, cell death) to the membrane or to proteins, amino acids, or metabolic processes incorporated therein via inducement of stress.

In embodiments, the biocidal microcapsules 206 may be configured for controlled release of the incorporated biocidal agents or compounds in response to external stimuli 208. For example, each biocidal microcapsule 206 may comprise a shell of synthetic polymer or biopolymer materials enclosing a core of solid and/or liquid biocidal compounds for controlled release. The biocidal infused composite fabric 200 may be subjected to stimuli 208 via the polymer coating 204, e.g., light, heat, or pressure, any of which alone or in combination may be indicative of microbial contact with the polymer coating. In embodiments, the external stimuli 208 may trigger the diffusion (210) of biocidal compounds from the biocidal microcapsules 206 onto the exterior surface 204a of the polymer coating 204, wherein any microbial substances may be compromised and/or killed by the biocidal compounds.

In some embodiments, the biocidal microcapsules 206 may be not less than 1 micron (1 µm) and not more than 100 microns (100 µm) in diameter. In some embodiments, the biocidal microcapsules 206 may include nanocapsules or nanoparticles of similar composition to the biocidal microcapsules described above but smaller in size, e.g., not more than 500 nm in diameter and ideally no more than 100 nm in diameter.

Referring now to FIG. 2B, the biocidal infused composite fabric 200a may be implemented and may function similarly to the biocidal infused composite fabric 200 of FIG. 2A, except that with respect to the biocidal infused composite fabric 200a, in some embodiments, biocidal molecules 212 may be crosslinked to polymer chain molecules 214 within the polymer coating 204 to form intermolecular covalent bridges. For example, the biocidal molecules 212 may be crosslinked to the polymer chain molecules via amino-based crosslinkers or any other appropriate crosslinking agents. In some embodiments, biocidal action may be associated with (e.g., triggered by) contact by microbes or pathogens with the biocidal molecules 212 on the surface of the biocidal infused composite fabric 200a, e.g., rather than controlled release of biocidal compounds. In some embodiments, stronger covalent bonds between the biocidal molecules 212 and polymer chain molecules 214 may enhance the ability of the biocidal infused composite fabric 200a to retain its biocidal properties even though the biocidal molecules are not encapsulated within biocidal microcapsules (206, FIG. 2A).

In embodiments, referring also to FIG. 2A, either or both of the polymer coating 204 and the fabric layer 202 may be treated with or may include flame-resistant compounds. For example, if the biocidal infused composite fabric 200 is configured for use within an aircraft passenger cabin, the biocidal infused composite fabric may need to meet or exceed regulatory standards for inflammability. In some embodiments, the flame-resistant compounds may include, but are not limited to, halogen-based compounds, phosphorus-based compounds, synergists or other composites, and any other flame-resistant compound compatible with the biocidal molecules 212 or biocidal microcapsules 206.

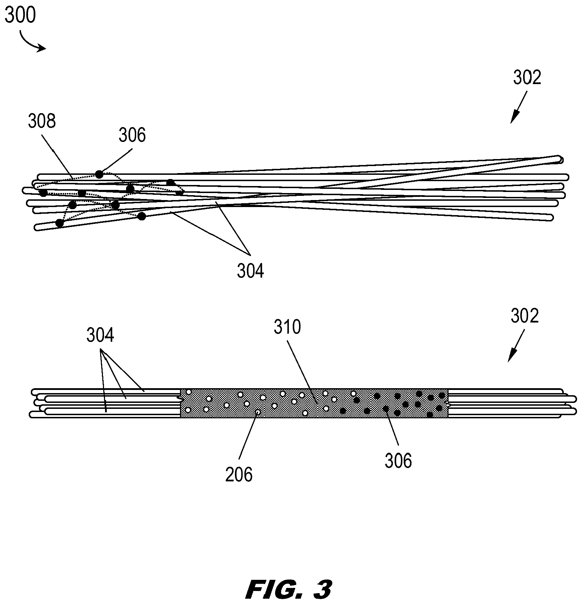

Referring also to FIG. 3, the fabric layer 300 may be implemented and may function similarly to the fabric layer 202 of FIG. 2, except that the fabric layer 300 may be further infused with additional biocidal capability.

Like the fabric layer 202, the fabric layer 300 may be woven from one or more yarns, each yarn comprising individual strands 302 and each strand comprising several woven fibers 304. In embodiments, each strand 302 of the fabric layer 300 may incorporate intrinsic biocidal molecules 306. For example, the composition of the biocidal molecules 306 may be similar to that of the biocidal molecules 212 shown by FIGS. 2B, except that the biocidal molecules 306 may be grafted to, or electrospun with, the individual fibers 304. For example, the fibers 304 may be electrospun from a liquid polymer or polymer solution incorporating the biocidal molecules 306, such that the molecules are incorporated into the individual fibers. In some embodiments, the biocidal molecules 306 may be molecularly crosslinked to a polymer chain matrix 308 within the individual strands 302 or fibers 304. In some embodiments, individual strands 302 of the yarn may instead be coated with a polymer coating 310 incorporating biocidal molecules 306 and/or biocidal microcapsules 206.

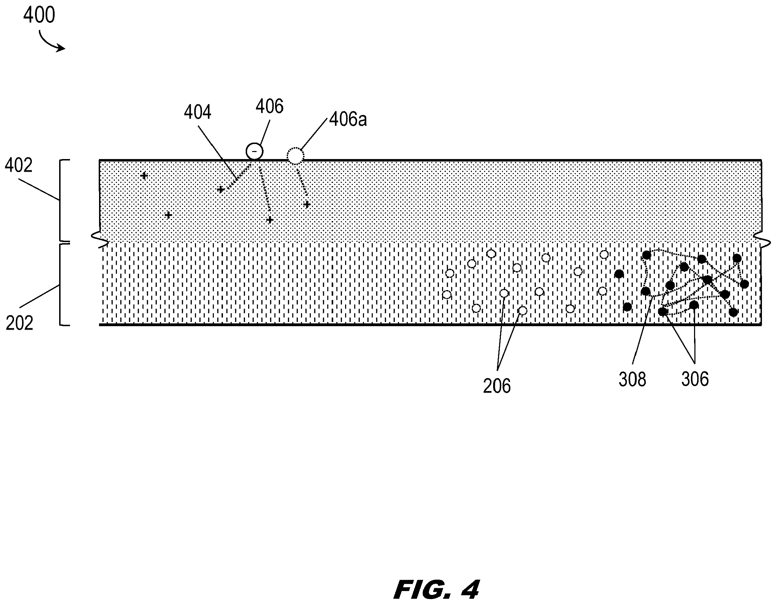

Referring to FIG. 4, the biocidal conductive composite fabric 400 may be implemented and may function similarly to the biocidal infused composite fabric 200 of FIG. 2, except that the biocidal conductive composite fabric 400 may incorporate a conjugated polymer coating 402 applied to the fabric layer 202.

In embodiments, the conjugated polymer coating 402 may incorporate charge transfer complexes or other intrinsically conductive polymers configured to generate electrostatic charge 404, e.g., between component molecules. For example, the conjugated polymer coating 402 may include, but is not limited to, polyacetylenes, polypyrroles, polythiophenes, polyanilines, or any other appropriate conjugated polymer compounds or composites thereof. In embodiments, the conjugated polymer coating 402 may be applied via, e.g., in situ chemical/oxidative electrochemical polymerization, electroless coating, and/or silk screen printing in addition to/instead of knife-over-roll coating, dip coating, or other coating techniques described above.

In some embodiments, the conjugated polymer coating 402 may further include metallic nanofillers, e.g., metal salt or oxide (silver, copper) nanoparticles. The conjugated polymer coating 402 may generate sufficient electropositivity (e.g., via electron donation) to react with negatively charged compounds within microbial cells 406, resulting in permeability loss and/or leakage within the cells (406a) due to induced stress.

In some embodiments, the fabric layer 202 may additionally incorporate biocidal microcapsules 206 and/or biocidal molecules 306 grafted, electrospun, cross-linked to polymer chain matrices 308, or otherwise impregnated into the strands (302, FIG. 3) or individual fibers (304, FIG. 3) of the yarn from which the fabric layer is woven.

### CONCLUSION

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A biocidal infused composite fabric (200, 400) installable on an interior surface of a mobile platform, the fabric comprising:
a flexible substrate (202) woven from a yarn comprising a plurality of fibers woven into a plurality of strands, the flexible substrate treated on an external surface with a polymer coating,
the polymer coating (204) comprising one or more biocidal compounds configured for biocidal action against one or more pathogens in contact with the fabric.

2. The biocidal infused composite fabric of Claim 1, wherein the one or more biocidal compounds comprise:
one or more microcapsules (206) disposed within the polymer coating, each microcapsule comprising a shell enclosing the one or more biocidal compounds and configured for controlled release of the one or more biocidal compounds in response to the one or more pathogens;
or
one or more biocidal molecules (212) attached to at least one of the plurality of fibers or the plurality of strands.

3. The biocidal infused composite fabric of Claim 2, wherein each fiber is electrospun from at least one of a liquid polymer or a polymer solution, the liquid polymer or the polymer solution including the one or more biocidal molecules.

4. The biocidal infused composite fabric of Claim 3, wherein the liquid polymer or the polymer solution is treated with one or more flame resistant compounds.

5. The biocidal infused composite fabric of Claim 2, wherein the one or more biocidal molecules (212) are grafted to each strand of the yarn.

6. The biocidal infused composite fabric of any preceding Claim, wherein:
the polymer coating comprises one or more polymer chain molecules;
and
the one or more biocidal molecules (212) are crosslinked to the one or more polymer chain molecules.

7. The fabric of any preceding Claim, wherein the polymer coating includes at least one flame resistant compound.

8. The biocidal infused composite fabric of any preceding Claim, wherein the one or more biocidal compounds (212) and the one or more biocidal molecules are selected from a group including: a metal salt, a metal oxide, a polycationic compound, or a quaternary ammonium compound.

9. The biocidal infused composite fabric of any preceding Claim, wherein each of the one or more microcapsules (206) is selected from a group including:
a microcapsule (20) having a diameter not less than 1 µm and not more than 100 µm;
or
a nanocapsule having a diameter not more than 500 nm.

10. A biocidal infused composite fabric installable on an interior surface of a mobile platform, the fabric comprising:
a flexible substrate (202) woven from a yarn comprising a plurality of fibers woven into a plurality of strands,
the flexible substrate (202) treated with a positively charged conjugated polymer coating configured to induce a conductive stress within one or more cells associated with negatively charged microbial compounds in contact with the fabric.

11. The biocidal infused composite fabric of Claim 10, wherein at least one of each fiber or each strand includes a plurality of biocidal molecules (212) attached thereto, the plurality of biocidal molecules configured for biocidal action against the one or more cells in response to contact with the fabric.

12. The biocidal infused composite fabric of Claim 11, wherein each fiber is electrospun from at least one of a liquid polymer or a polymer solution, the liquid polymer or the polymer solution including the plurality of biocidal molecules.

13. The biocidal infused composite fabric of Claim 12, wherein the liquid polymer or the polymer solution is treated with one or more flame resistant compounds.

14. The biocidal infused composite fabric of Claim 11, wherein each of the plurality of biocidal molecules are grafted to each strand of the yarn.

15. The biocidal infused composite fabric of Claim 11, wherein each of the plurality of biocidal molecules are selected from a group including: a metal salt, a metal oxide, a polycationic compound, or a quaternary ammonium compound.
